# EUROPEAN PATENT APPLICATION

(11) **EP 2 753 081 A2**
(43) Date of publication of application: **09.07.2014**
(21) Application number: 12829020.2
(22) Date of filing: 03.09.2012
(51) Int. Cl.: H04N 7/32

(54) **IMAGE ENCODING/DECODING METHOD FOR RATE-DISTORTION OPTIMIZATION AND DEVICE FOR PERFORMING SAME**

(30) Priority: 02.09.2011 KR 20110089163
(71) Applicant: Humax Co., Ltd., Seongnam-si, Gyeonggi-do 463-825 (KR)
(72) Inventor: YIE, Chung Ku, Incheon 403-762 (KR); KIM, Min Sung, Anyang-si Gyeonggi-do 431-719 (KR); PARK, Joon Seong, Yongin-si Gyeonggi-do 448-990 (KR)
(74) Representative: Zardi, Marco
(86) International application number: PCT/KR2012/007051
(87) International publication number: WO 2013/032312

(57) **Abstract**

Disclosed are an image encoding/decoding method for rate-distortion optimization and a device for performing the same. A macroblock to be encoded is provided, a prediction macroblock is generated by executing either inter prediction or intra prediction, a residual prediction block is generated on the basis of the generated prediction macroblock and the provided macroblock, and the residual prediction block is transformed by applying one of a plurality of predetermined transform matrices to the generated residual prediction block. Accordingly, rate-distortion can be optimized, and image quality can be enhanced.

## Description

### [Technical Field]

The present invention relates to encoding and decoding images, and more specifically, to an image encoding/decoding method for rate-distortion optimization and an apparatus of performing the same.

### [Background Art]

In general, an image compression method performs encoding by separating one picture into a plurality of blocks each having a predetermined size. Further, the inter prediction and intra prediction technology is used to remove redundancy of a plurality of pictures so as to raise compression efficiency.

A method of encoding images using inter prediction compresses images by eliminating temporal redundancy between pictures, and its representative example is the motion compensation prediction encoding method.

The motion compensation prediction encoding generates a motion vector (MV) by searching a region similar to a block that is currently encoded in at least one reference picture positioned before and/or behind a picture that is currently encoded, performs DCT on a residual value between the current block and a prediction block obtained by conducting motion compensation using the generated motion vector, quantizes and entropy encodes the DCTed value and transmits the resultant value.

In general, blocks having various sizes such as 16x16, 8x16, and 8x8 pixels are used for motion compensation prediction, and a block having a size of 8x8 or 4x4 pixels is used for transform and quantization.

The intra prediction is a method of compressing images by eliminating spatial redundancy using a pixel correlation between blocks in a picture. In the intra prediction method, a prediction value of a current block to be encoded is generated from encoded pixels adjacent to the current block, and the generated prediction value and the residual value of the pixels in the current block are subjected to compression. In the H.264/AVC standards, the size of a block used for intra prediction is 4x4, 8x8 or 16x16 pixels. A block having a size of 4x4 or 8x8 pixels is subject to intra prediction using nine intra prediction modes, and a block having a size of 16x16 pixels is subject to intra prediction using four intra prediction modes.

As described above, the residual value generated through intra prediction undergoes transform and quantization.

However, conventional transform methods do not take the characteristics of each block into consideration, thus failing to maximize transform performance in light of rate-distortion.

### [Disclosure]

### [Technical Problem]

An object of the present invention is to provide an image encoding and decoding method for rate-distortion optimization that may maximize transform performance.

Further, another object of the present invention is to provide an image encoding apparatus and decoding apparatus of performing the above-described transform method.

### [Technical Solution]

To achieve the above-described objects of the present invention, according to an aspect of the present invention, an image encoding method comprises receiving a coding unit to be encoded, generating a prediction block by performing one of inter prediction and intra prediction on the coding unit, generating a residual prediction block based on the generated prediction block and the coding unit, and transforming the generated residual prediction block by applying a plurality of predetermined transform matrices to the residual prediction block.

To achieve the above-described objects of the present invention, according to an aspect of the present invention, an image decoding method of decoding an encoded bit stream by applying a transform matrix having the best encoding efficiency of a plurality of predetermined transform matrices to a residual prediction block comprises extracting at least one information of a motion vector, a quantized residual prediction block, a motion vector, an intra prediction mode, and a transform matrix by entropy-decoding the bit stream, inverse-quantizing the quantized residual prediction block, restoring the residual prediction block by inverse-transforming the inverse-quantized residual prediction block by applying the transform matrix to the inverse-quantized residual prediction block, generating a prediction block by performing one of motion compensation and intra prediction, and restoring an original coding unit by adding the restored residual prediction block and the generated prediction block. The transform matrix may use at least one transform matrix of DST (Discrete Sine Transform) and DCT (Discrete Cosine Transform) on a 4x4 block whose prediction mode is an intra prediction mode with respect to a luma signal. The transform matrix may use a DST (Discrete Sine Transform) transform matrix on a 4x4 block whose prediction mode is an intra prediction mode with respect to a luma signal. The transform matrix may use at least transform matrix of DST (Discrete Sine Transform) and DCT (Discrete Cosine Transform) on a 4x4 block whose prediction mode is an intra prediction mode with respect to a chroma signal. The transform matrix may use a DST (Discrete Sine Transform) transform matrix on a 4x4 block whose prediction mode is an intra prediction mode with respect to a chroma signal.

### [Advantageous Effects]

According to the image encoding/decoding method and apparatus of performing the same, all of a plurality of predetermined transform matrices, which is determined according to the size of the block to be transformed upon transform, are applied to a residual prediction block generated through inter prediction or intra prediction, and a transform matrix having the best encoding efficiency is adopted to transform the residual prediction block, thus resulting in the ratio-distortion being optimized and the image quality being enhanced.

Further, one of DST (Discrete Sine Transform) and DCT (Discrete Cosine Transform) is performed only on a 4x4 block whose prediction mode is an intra prediction mode with respect to a luma signal, and thus, complexity may be reduced as compared with when the transform is performed on both a 4x4 block and an 8x8 block because a memory for storing only one additional DST matrix (or DCT matrix) for the 4x4 block size is required.

Further, one of DST (Discrete Sine Transform) and DCT (Discrete Cosine Transform) is performed only on a 4x4 block whose prediction mode is an intra prediction mode with respect to a chroma signal, and thus, complexity may be reduced as compared with when the transform is performed on both a 4x4 block and an 8x8 block because a memory for storing only one additional DST matrix (or DCT matrix) for the 4x4 block size is required.

### [Description of Drawings]

Fig. 1 is a block diagram illustrating the configuration of an image encoding apparatus using weighted prediction according to an example embodiment of the present invention.
Fig. 2 is a flowchart illustrating an image encoding method using weighted prediction according to an example embodiment of the present invention.
Fig. 3 is a block diagram illustrating the configuration of an image decoding apparatus using weighted prediction according to an example embodiment of the present invention.
Fig. 4 is a flowchart illustrating an image decoding method using weighted prediction according to an example embodiment of the present invention.

### [Best Mode]

Various modifications may be made to the present invention and the present invention may have a number of embodiments. Specific embodiments are described in detail with reference to the drawings.

However, the present invention is not limited to specific embodiments, and it should be understood that the present invention includes all modifications, equivalents, or replacements that are included in the spirit and technical scope of the present invention.

The terms "first" and "second" may be used to describe various components, but the components are not limited thereto. These terms are used only to distinguish one component from another. For example, the first component may be also named the second component, and the second component may be similarly named the first component. The term "and/or" includes a combination of a plurality of related items as described herein or any one of the plurality of related items.

When a component is "connected" or "coupled" to another component, the component may be directly connected or coupled to the other component. In contrast, when a component is directly connected or coupled to another component, no component intervenes.

The terms used herein are given to describe the embodiments but not intended to limit the present invention. A singular term includes a plural term unless otherwise stated. As used herein, the terms "include" or "have" are used to indicate that there are features, numerals, steps, operations, components, parts or combinations thereof as described herein, but do not exclude the presence or possibility of addition of one or more features, numerals, steps, operations, components, parts or components thereof.

Unless defined otherwise, all the terms including technical or scientific terms as used herein have the same meanings as those generally understood by one of ordinary skill in the art. Such terms as generally defined in the dictionary should be interpreted as having meanings consistent with those understood in the context of the related technologies, and should not be construed as having excessively formal or ideal meanings unless clearly defined in the instant application.

Hereinafter, preferred embodiments of the present invention will be described in detail with reference to the accompanying drawings. For better understanding of the entire invention, the same references are used to denote the same elements throughout the drawings, and description thereof is not repeated.

A residual value generated through intra prediction goes through transform and quantization processes. In the transform process, one transform matrix may be identically applied to all the blocks, or a transform matrix predetermined according to a selected intra prediction mode may be applied to the blocks.

For example, the MDDT (Mode-Dependent Directional Transform) compresses energy of a prediction error block in the frequency domain using a basis vector designed based on the KLT (Karhunen-Loeve Transform) according to the directivity of the intra prediction method with respect to a residual value generated after intra prediction is performed (that is, prediction error block) in order to reduce the residual value generated through intra prediction. The MDDT technology applies transform depending on the intra prediction mode, and thus, the characteristics of quantized transform coefficients generated after quantization may also have different forms depending on the directivity, and adaptive scanning is adopted so as to more efficiently encode such coefficients.

In a mode-dependent transform method according to an example embodiment of the present invention, along the horizontal direction or vertical direction depending on the intra prediction mode, DST (Discrete Sine Transform) and/or DCT (Discrete Cosine Transform) can be performed on a residual value (i.e., prediction error block) generated by performing intra prediction on a block having a predetermined size (for example, a 4x4 block and/or an 8x8 block) with respect to a luma signal.

In other words, the mode-dependent transform method according to an example embodiment of the present invention may perform DST (Discrete Sine Transform) and/or DCT (Discrete Cosine Transform) on a block having a predetermined size (for example, a 4x4 block and/or an 8x8 block), whose prediction mode is an intra prediction mode, with respect to a luma signal.

In case the size of a prediction unit is 4x4 pixels, one of a total of 18 directions is determined as the prediction direction, and in case the size of the prediction unit is 8x8 pixels, one of a total of 35 directions may be used as the prediction direction. The number of prediction directions depending on the size of the prediction unit is not limited thereto, and the number of prediction direction may vary considering the spatial redundancy characteristic of images so that the size of the prediction unit may be increased.

Accordingly, the mode-dependent transform method according to an example embodiment of the present invention may perform DST (Discrete Sine Transform) and/or DCT (Discrete Cosine Transform) on a residual value (i.e., prediction error block) generated after intra prediction is performed on the 4x4 block along the horizontal or vertical direction depending on 18 intra prediction modes with respect to the luma signal.

For example, the mode-dependent transform method according to an example embodiment of the present invention may perform DCT (Discrete Cosine Transform) on a residual value (i.e., prediction error block) generated after intra prediction is performed on the 4x4 block in case the intra prediction mode is a vertical mode (or 0) with respect to the luma signal along the vertical direction. Alternatively, the mode-dependent transform method according to another example embodiment of the present invention may perform DCT along the horizontal direction on a residual value (i.e., prediction error block) generated after intra prediction is performed in case the intra prediction mode is the vertical mode (or 0) on the 4x4 block with respect to the luma signal.

Alternatively, the mode-dependent transform method according to another example embodiment of the present invention may perform DCT along the vertical direction on a residual value (i.e., prediction error block) generated after intra prediction is performed in case the intra prediction mode is a horizontal mode (or 1) on the 4x4 block with respect to the luma signal. Or, the mode-dependent transform method according to another embodiment of the present invention may perform DST along the horizontal direction on a residual value (i.e., prediction error block) generated after intra prediction is performed in case the intra prediction mode is the horizontal mode (or 1) on the 4x4 block with respect to the luma signal.

Alternatively, the mode-dependent transform method according to another embodiment of the present invention may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on an 8x8 block with respect to a luma signal.

For example, the mode-dependent transform method according to an embodiment of the present invention may perform DST (Discrete Sine Transform) along the vertical direction on a residual value (i.e., prediction error block) generated after intra prediction is performed in case the intra prediction mode is the vertical mode (or 0) on the 8x8 block with respect to the luma signal. Alternatively, the mode-dependent transform method according to another embodiment of the present invention may perform DCT along the horizontal direction on a residual value (i.e., prediction error block) generated after intra prediction is performed in case the intra prediction mode is the vertical mode (or 0) on the 8x8 block with respect to the luma signal.

Alternatively, the mode-dependent transform method according to another embodiment of the present invention may perform DCT along the vertical direction on a residual value (i.e., prediction error block) generated after intra prediction is performed in case the intra prediction mode is the horizontal mode (or 1) on the 8x8 block with respect to the luma signal. Alternatively, the mode-dependent transform method according to another embodiment of the present invention may perform DST along the horizontal direction on a residual value (i.e., prediction error block) generated after intra prediction is performed in case the intra prediction mode is the horizontal mode (or 1) on the 8x8 block with respect to the luma signal.

Alternatively, the mode-dependent transform method according to an embodiment of the present invention may perform one of DST (Discrete Sine Transform) and DCT (Discrete Cosine Transform) only on a 4x4 block whose prediction mode is an intra prediction mode with respect to a luma signal.

In the above-described mode-dependent transform method according to example embodiments of the present invention, transform is performed only on a 4x4 block with respect to a luma signal. Accordingly, as compared with when intra prediction is performed on both a 4x4 block and an 8x8 block, complexity may be reduced because a memory for storing only one additional DST matrix (or DCT matrix) with respect to the size of the 4x4 block is required.

The mode-dependent transform method according to the example embodiments of the present invention has been described with respect to the luma signal. However, the mode-dependent transform method may be applied to a chroma signal in the same way. This is hereinafter described in greater detail.

The mode-dependent transform method according to an embodiment of the present invention may perform DST (Discrete Sine Transform) and/or DCT (Discrete Cosine Transform) along the horizontal direction or vertical direction depending on an intra prediction mode on a residual value (i.e., prediction error block) generated after intra prediction is performed on a block having a predetermined size-for example, a 4x4 block and/or 8x8 block-with respect to a chroma signal.

That is, the mode-dependent transform method according to an embodiment of the present invention may perform DST (Discrete Sine Transform) and/or DCT (Discrete Cosine Transform) on a block having a predetermined size (for example, a 4x4 block and/or 8x8 block) whose prediction mode is an intra prediction mode with respect to the chroma signal.

The mode-dependent transform method according to an embodiment of the present invention may perform DST (Discrete Sine Transform) and/or DCT (Discrete Cosine Transform) along the horizontal direction or vertical direction depending on 18 intra prediction modes on a residual value (i.e., prediction error block) generated after intra prediction is performed on a 4x4 block with respect to the chroma signal.

For example, the mode-dependent transform method according to an embodiment of the present invention may perform DST (Discrete Sine Transform) along the vertical direction on a residual value (i.e., prediction error block) generated after intra prediction is performed in case the intra prediction mode is the vertical mode (or 0) on a 4x4 with respect to the chroma signal. Alternatively, the mode-dependent transform method according to another embodiment of the present invention may perform DCT along the horizontal direction on a residual value (i.e., prediction error block) generated after intra prediction is performed in case the intra prediction mode is the vertical mode (or 0) on the 4x4 block with respect to the chroma signal.

Alternatively, the mode-dependent transform method according to another embodiment of the present invention may perform DCT along the vertical direction on a residual value (i.e., prediction error block) after intra prediction is performed in case the intra prediction mode is the horizontal mode (or 1) on the 4x4 block with respect to the chroma signal. Or the mode-dependent transform method according to another embodiment of the present invention may perform DST along the horizontal direction on a residual value (i.e., prediction error block) generated after intra prediction is performed in case the intra prediction mode is the horizontal mode (or 1) on the 4x4 block with respect to the chroma signal.

Alternatively, the mode-dependent transform method according to another embodiment of the present invention may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on the 8x8 block with respect to the chroma signal.

For example, the mode-dependent transform method according to an embodiment of the present invention may perform DST (Discrete Sine Transform) along the vertical direction on a residual value (i.e., prediction error block) generated after intra prediction is performed in case the intra prediction mode is the vertical mode (or 0) on the 8x8 block with respect to the chroma signal. Alternatively, the mode-dependent transform method according to another embodiment of the present invention may perform DCT along the horizontal direction on a residual value (i.e., prediction error block) generated after intra prediction is performed in case the intra prediction mode is the vertical mode (or 0) on the 8x8 block with respect to the chroma signal.

Alternatively, the mode-dependent transform method according to another embodiment of the present invention may perform DCT along the vertical direction on a residual value (i.e., prediction error block) after intra prediction is performed in case the intra prediction mode is the horizontal mode (or 1) on the 8x8 block with respect to the chroma signal. Alternatively, the mode-dependent transform method according to another embodiment of the present invention may perform DST along the horizontal direction on a residual value (i.e., prediction error block) generated after intra prediction is performed in case the intra prediction mode is the horizontal mode (or 1) on the 8x8 block with respect to the chroma signal.

Alternatively, the mode-dependent transform method according to an embodiment of the present invention may perform one of the DST (Discrete Sine Transform) and the DCT (Discrete Cosine Transform) only on a 4x4 block whose prediction mode is an intra prediction mode with respect to a chroma signal.

In the mode-dependent transform method according to the embodiments of the present invention, intra prediction is performed only on a 4x4 block with respect to a chroma signal. Accordingly, as compared with when intra prediction is performed on both a 4x4 block and an 8x8 block, complexity may be reduced because a memory for storing only one additional DST matrix (or DCT matrix) is required with respect to the 4x4 block size.

Hereinafter, according to an embodiment of the present invention, the extended macro block means a block having a size of 32x32 pixels or more or a size of 64x64 pixels or more.

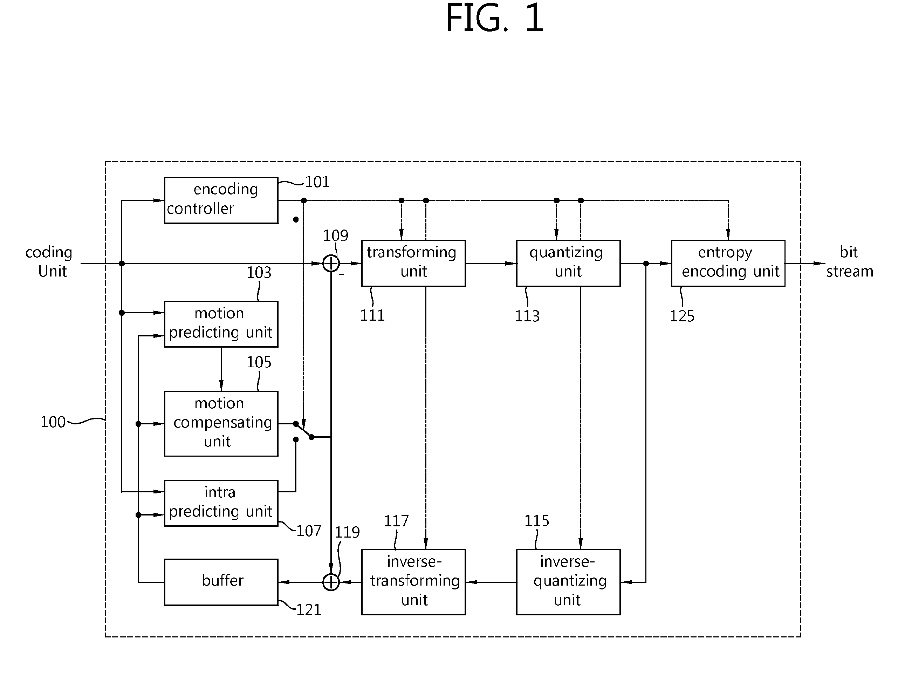

Fig. 1 is a block diagram illustrating the configuration of an image encoding apparatus according to an embodiment of the present invention.

Referring to Fig. 1, the encoding apparatus 100 according to an embodiment of the present invention includes an encoding controller 101, a motion predicting unit 103, a motion compensating unit 105, an intra predicting unit 107, a first adder 109, a transforming unit 111, an inverse-quantizing unit 115, an inverse-transforming unit 117, a second adder 119, a buffer 121, and an entropy encoding unit 125.

The encoding controller 101 determines the encoding mode of a coding unit entered as one of an inter prediction mode and an intra prediction mode, and based on the determined encoding mode, connects one of the motion compensating unit 105 and the intra predicting unit 107 to the first adder 109 and the second adder 119. Further, the encoding controller 101 provides encoding-related overhead information including a transform matrix used for transform to the entropy encoding unit 125 and controls the operation of the constituent elements included in the encoding apparatus. Although in Fig. 1 the encoding controller 101 is included in the encoding apparatus 100, the encoding controller 101 may also be implemented not to be included in the encoding apparatus 100.

Here, the entered coding unit has a square shape, and each coding unit (CU) may have a variable size of 2Nx2N (unit: pixels). Inter prediction (or inter-frame prediction), intra prediction (or intra-frame prediction), transform, quantization, and entropy encoding may be performed on a per-coding unit (CU) basis. The coding units (CUs) may include a largest coding unit (LCU) and a smallest coding unit (SCU). The size of the largest coding unit (LCU) or the smallest coding unit (SCU) may be represented as the power of 2 which is 8 or more. For example, the entered coding unit may have a size of 16x16 pixels or less or may be an extended macro block having a size of 32x32 or 64x64 pixels or more. The extended macro block may have a size of 32x32 pixels or more, i.e., 64x64 pixels, 128x128 pixels or more, so as to fit into a high resolution such as an HD (Ultra High Definition) or higher resolution. The extended macro block, in case it has a high resolution such as ultra HD (High Definition) or higher resolution, may be limited in size to up to 64x64 pixels considering the complexity of the encoder and decoder.

The coding unit (CU) may have a recursive tree structure. The recursive tree structure may be represented through a series of flags. For example, in case a coding unit (CUk) having a level or depth of k has a flag value of 0, the coding on the coding unit (CUk) is fulfilled with respect to a current level or depth, and in case the flag value is 1, the coding unit (CUk) having a current level or depth of k is split into four independent coding units

(CUk+1), and the split coding unit (CUk+1) has a level or depth of k+1, with a size of Nk+1 X Nk+1. In such case, the coding unit (CUk+1) may be represented as a sub coding unit of the coding unit (CUk). The coding unit (CUk+1) may be recursively processed until the level or depth of the coding unit (CUk+1) reaches a maximum permissible level or depth. In case the level or depth of the coding unit (CUk+1) is the same as the maximum permissible level or depth, no further split is allowed.

The size of the largest coding unit (LCU) and the size of the smallest coding unit (SCU) may be included in a sequence parameter set (SPS). The sequence parameter set (SPS) may include the maximum permissible level or depth of the largest coding unit (LCU). For example, in case the maximum permissible level or depth is 5, and the size of an edge of the largest coding unit (LCU) is 128 (unit: pixels), five types of coding unit sizes, such as 128x128 (LCU), 64x64, 32x32, 16x16, and 8x8 (SCU), may be possible. That is, if the size of the largest coding unit (LCU) and the maximum permissible level or depth are given, the permissible coding unit size may be determined.

The size of the coding unit, when it comes to the high resolution such as ultra HD (High Definition) or higher resolution, may be limited to a maximum of 64x64 pixels or less considering the complexity of the encoder and decoder.

The use of the above-described recursive coding unit structure provides the following advantages.

First, a larger size than that of the existing 16x16 macro block may be provided. If an image region of interest is homogeneous, the largest coding unit (LCU) may display the image region of interest with a smaller number of symbols as compared with when several small blocks are used.

Second, various sizes may be applied to the largest coding unit (LCU) as compared with when a fixed size of macro block is used. Accordingly, a codec may be readily optimized for various types of content, applications and devices. That is, the largest coding unit (LCU) size and maximum level or maximum depth may be properly chosen, so that the hierarchical block structure may be optimized better for a targeted application.

Third, without being separated into the macro block, sub-macro block, and extended macro block, a single unit, i.e., a coding unit (LCU), is used, so that the multi-level hierarchical structure may be represented in a very simple manner using the largest coding unit (LCU) size, maximum level (or maximum depth) and a series of flags. When used together with a size-independent syntax representation, it may be sufficient to specify a syntax item having a normalized size for the remaining coding tools, and such consistency may simplify, e.g., the actual parsing process. The level (or maximum depth) may have any maximum value, and may have a value larger than the value permitted in the existing H.264/AVC encoding scheme. The size-independent syntax representation may be used to specify all syntax elements in a consistent manner independent from the size of the coding unit (CU). The splitting process for the coding unit (CU) may be recursively specified, and other syntax elements for the leaf coding unit-last coding unit of the level-may be defined to have the same size irrespective of the size of the coding unit. To make a representation as described above may be very efficient in reducing the parsing complexity, and in case a large level or depth is allowed, the clarity of representation may be enhanced.

If the above-described hierarchical splitting process is complete, inter prediction or intra prediction may be performed on the leaf unit of the leaf coding unit layer tree with no further split, and largest, and such leaf coding unit is used as a prediction unit (PU) that is a basis of inter prediction or intra prediction.

In order to perform inter prediction or intra prediction, partitioning is carried out on the leaf coding unit. That is, the partitioning is fulfilled on the prediction unit (PU). Here, the prediction unit (PU) means a basis for inter prediction or intra prediction, and may be an existing macro block or a sub-macro block, or may be a coding unit or an extended macro block having a size of 32x32 pixels.

The partitioning for inter prediction or intra prediction may be performed by an asymmetric partitioning scheme or in a geometrical partitioning scheme that provides a shape other than a square shape, or may be done by an along-edge-direction partitioning scheme.

Referring back to Fig. 1, the motion predicting unit 103 performs inter prediction based on a plurality of reference pictures that have been completely restored and are stored in the buffer 121 and the entered coding unit, thereby generating a motion vector. Here, the generated motion vector is provided to the motion compensating unit 105 and the entropy encoding unit 125.

The motion compensating unit 105 applies the motion vector provided to the motion predicting unit 103 to a corresponding reference picture stored in the buffer 121, thereby generating a prediction block that has undergone motion compensation.

The intra predicting unit 107 generates a prediction value of a current block from encoded pixels adjacent to the entered coding unit. Here, the intra predicting unit 107 may separate the entered coding unit into blocks each having a size of 4x4, 8x8, or 16x16 pixels, and may generate a prediction block from pixels adjacent to each separated block. When performing intra prediction on blocks each having a size of 4x4 or 8x8 pixels, the intra predicting unit 107 may perform the intra prediction on the 4x4 or 8x8 pixel blocks using one nine H.264/AVC intra prediction modes. The intra predicting unit 107 may perform intra prediction on blocks each having a size of 16x16 pixels using one of four intra prediction modes.

Alternatively, the intra predicting unit 107 may determine one of 18 prediction directions , when performing intra prediction using a prediction unit having a size of 4x4 pixels, may determine one of 35 prediction directions when performing intra prediction using a prediction unit having a size of 8x8 pixels, may determine one of 35 prediction directions when performing intra prediction on a prediction unit having a size of 16x16 pixels, may determine one of 35 prediction directions when performing intra prediction on a prediction unit (PU) having a size of 32x32 pixels, and may determine one of four prediction directions when performing intra prediction on a prediction unit (PU) having a size of 64x64 pixels. The number of prediction directions depending on the size of the prediction unit is not limited thereto, and as the size of the prediction unit, the number of prediction directions may vary considering the spatial redundancy of the image.

In the encoding apparatus 100 according to an embodiment of the present invention, only one of the inter prediction mode through the motion predicting unit 103 and the motion compensating unit 105 and the intra prediction mode through the intra predicting unit 107 may be carried out under control of the encoding controller 101, and in case one of the inter prediction mode and intra prediction mode is selected, the encoding controller 101 switches a connection path so that one of an output from the motion compensating unit 105 and an output from the intra predicting unit 107, which corresponds to the selected prediction mode, may be provided to the first adder 109 and the second adder 119.

The first adder 109, in case inter prediction encoding is performed, computes the entered coding unit and the prediction block provided from the motion compensating unit 105 to generate a residual value (or residual prediction block), and in case intra prediction encoding is performed, computes the entered coding unit and the prediction block provided from the intra predicting unit 107 to generate a residual value.

The transforming unit 111 performs transform using one of a plurality of predetermined transform matrices considering the encoding efficiency and size of each of residual prediction blocks (i.e., residual values) provided from the first adder 109, which are to be transformed.

Specifically, when intra prediction encoding is performed and the size of a block to be transformed is 4x4 pixels or 8x8 pixels, the transforming unit 111 applies a predetermined number (e.g., 9) of transform matrices all to each transform block, and then may perform encoding using a transform matrix having the best encoding efficiency. When intra prediction encoding is performed, and the size of a block to be transformed is 16x16 pixels, the transforming unit 111 applies a predetermined number (e.g., 4) of transform matrices all to each transform block, and then may perform encoding by using a transform matrix having the best encoding efficiency. Here, the predetermined number of transform matrices may be transform matrices defined in the MDDT (Mode Dependent Directional Transform).

The MDDT performs transform along an intra coding-specific direction-for example, an intra mode used for encoding (or intra coding direction). For example, in case among nine intra modes, a horizontal direction mode is used to perform intra coding on a 4x4 block, transform may be performed along the horizontal direction.

The size of the block to be transformed may be a 4x4 block, an 8x8 block, a 16x16 block or a 32x32 block.

The block used for transform may be implemented as a transform unit (TU), and the transform unit may have a recursive tree structure (hierarchical structure transform). For example, the transform unit may have a two-level tree structure. For example, in case a transform unit having a level or depth of k comes with a flag value of 0, transform on the transform unit is done for the current level or depth, and in case the flag value is 1, a coding unit (CUk) having a current level or depth of k is split into four independent coding units (CUk+1), and the split coding units (CUk) each may have a level or depth of k+1 and may have a size of Nk+1 X Nk+1.

Alternatively, even in case inter prediction encoding is performed and the size of a block to be transformed is 32x32 pixels or more, the transforming unit 111 may apply all of a predetermined number of transform matrices corresponding to the inter prediction encoding, and then may perform encoding using a transform matrix having the best encoding efficiency.

In accordance with the mode-dependent transform method according to an embodiment of the present invention, the transforming unit 111 may perform DST (Discrete Sine Transform) and/or DCT (Discrete Cosine Transform) along the horizontal direction or vertical direction depending on an intra prediction mode on a residual value (i.e., prediction error block) generated after intra prediction is performed on a block having a predetermined size-for example, a 4x4 block and/or 8x8 block-with respect to a luma signal.

That is, in the mode-dependent transform method according to an embodiment of the present invention, the transforming unit 111 may perform DST (Discrete Sine Transform) and/or DCT (Discrete Cosine Transform) on a block whose prediction mode is an intra prediction mode and which has a predetermined size-for example, a 4x4 block and/or 8x8 block-with respect to the luma signal.

In case the size of the prediction unit (PU) is 4x4 pixels, one of a total of 18 prediction directions is determined, and in case the size of the prediction unit (PU) is 8x8 pixels, one of a total of 35 prediction directions may be used. The number of prediction directions depending on the size of the prediction unit is not limited thereto, and as the size of the prediction unit (PU) increases, the number of prediction directions may vary considering the spatial redundancy of the image.

Accordingly, the transforming unit 111 may perform DST (Discrete Sine Transform) and/or DCT (Discrete Cosine Transform) along the horizontal direction or vertical direction depending on 18 intra prediction modes on a residual value (i.e., prediction error block) generated after intra prediction is performed on a 4x4 block with respect to a luma signal.

For example, the transforming unit 111 may perform DST (Discrete Sine Transform) along the vertical direction on a residual value (i.e., prediction error block) generated after intra prediction is performed in case the intra prediction mode is the vertical mode (or 0) on the 4x4 block with respect to the luma signal. Alternatively, the transforming unit 111 may perform DCT along the horizontal direction on a residual value (i.e., prediction error block) generated after intra prediction is performed in case the intra prediction mode is the vertical mode (or 0) on the 4x4 block with respect to the luma signal.

Alternatively, the transforming unit 111 may perform DCT along the vertical direction on a residual value (i.e., prediction error block) generated after intra prediction is performed in case the intra prediction mode is the horizontal mode (or 1) on the 4x4 block with respect to the luma signal. Alternatively, the transforming unit 111 may perform DST along the horizontal direction on a residual value (i.e., prediction error block) generated after intra prediction is performed in case the intra prediction mode is the horizontal mode (or 1) on the 4x4 block with respect to the luma signal.

Alternatively, the transforming unit 111 may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on an 8x8 block with respect to the luma signal.

For example, the transforming unit 111 may perform DST (Discrete Sine Transform) along the vertical direction on a residual value (i.e., prediction error block) generated after intra prediction is performed in case the intra prediction mode is the vertical mode (or 0) on the 8x8 block with respect to the luma signal. Alternatively, the transforming unit 111 may perform DCT along the horizontal direction on a residual value (i.e., prediction error block) generated after intra prediction is performed in case the intra prediction mode is the vertical mode (or 0) on the 8x8 block with respect to the luma signal.

Alternatively, the transforming unit 111 may perform DCT along the vertical direction on a residual value (i.e., prediction error block) generated after intra prediction is performed in case the intra prediction mode is the horizontal mode (or 1) on the 8x8 block with respect to the luma signal. Alternatively, the transforming unit 111 may perform DST along the horizontal direction on a residual value (i.e., prediction error block) generated after intra prediction is performed in case the intra prediction mode is the horizontal mode (or 1) on the 8x8 block with respect to the luma signal.

Alternatively, in the mode-dependent transform method according to an embodiment of the present invention, the transforming unit 111 may perform one of DST (Discrete Sine Transform) and DCT (Discrete Cosine Transform) only on a 4x4 block whose prediction mode is an intra prediction mode with respect to the luma signal.

In case the transforming unit 111 performs the transform on only the 4x4 block with respect to the luma signal, complexity may be reduced as compared with when the transform is performed on both the 4x4 block and the 8x8 block because of requiring a memory for storing only one additional DST matrix (or DCT matrix) for the 4x4 block size.

The mode-dependent transform method according to the embodiments of the present invention has been described in relation to the luma signal, but the same method may be likewise performed on a chroma signal. This is hereinafter described in greater detail. The transforming unit 111 may perform DST (Discrete Sine Transform) and/or DCT (Discrete Cosine Transform) along the horizontal direction or vertical direction depending on an intra prediction mode on a residual value (i.e., prediction error block) generated after intra prediction is performed on a block having a predetermined size-for example, a 4x4 block and/or 8x8 block-with respect to a chroma signal.

That is, in the mode-dependent transform method according to an embodiment of the present invention, the transforming unit 111 may perform DST (Discrete Sine Transform) and/or DCT (Discrete Cosine Transform) on a block whose prediction mode is an intra prediction mode and which has a predetermined size-for example, a 4x4 block and/or 8x8 block-with respect to a chroma signal.

The transforming unit 111 may perform DST (Discrete Sine Transform) and/or DCT (Discrete Cosine Transform) along the horizontal direction or vertical direction depending ion 18 intra prediction modes on a residual value (i.e., prediction error block) generated after intra prediction is performed on a 4x4 block with respect to the chroma signal.

For example, the transforming unit 111 may perform DST (Discrete Sine Transform) along the vertical direction on a residual value (i.e., prediction error block) generated after intra prediction is performed in case the intra prediction mode is the vertical mode (or 0) on the 4x4 block with respect to the chroma signal. Alternatively, the transforming unit 111 may perform DCT along the horizontal direction on a residual value (i.e., prediction error block) generated after intra prediction is performed in case the intra prediction mode is the vertical mode (or 0) on the 4x4 block with respect to the chroma signal.

Alternatively, the transforming unit 111 may perform DCT along the vertical direction on a residual value (i.e., prediction error block) generated after intra prediction is performed in case the intra prediction mode is the horizontal mode (or 1) on the 4x4 block with respect to the chroma signal. Alternatively, the mode-dependent transform method according to another embodiment of the present invention may perform DST along the horizontal direction on a residual value (i.e., prediction error block) generated after intra prediction is performed in case the intra prediction mode is the horizontal mode (or 1) on the 4x4 block with respect to the chroma signal.

Alternatively, the transforming unit 111 may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on an 8x8 block with respect to the chroma signal.

For example, the transforming unit 111 may perform DST (Discrete Sine Transform) along the vertical direction on a residual value (i.e., prediction error block) generated after intra prediction is performed in case the intra prediction mode is the vertical mode (or 0) on the 8x8 block with respect to the chroma signal. Alternatively, the transforming unit 111 may perform DCT along the horizontal direction on a residual value (i.e., prediction error block) generated after intra prediction is performed in case the intra prediction mode is the vertical mode (or 0) on the 8x8 block with respect to the chroma signal.

Alternatively, the transforming unit 111 may perform DCT along the vertical direction on a residual value (i.e., prediction error block) generated after intra prediction is performed in case the intra prediction mode is the horizontal mode (or 1) on the 8x8 block with respect to the chroma signal. Alternatively, the transforming unit 111 may perform DST along the horizontal direction on a residual value (i.e., prediction error block) generated after intra prediction is performed on the 8x8 block with respect to the chroma signal.

Alternatively, the mode-dependent transform method according to an embodiment of the present invention may perform one of the DST (Discrete Sine Transform) and DCT (Discrete Cosine Transform) only on a 4x4 block whose prediction mode is an intra prediction mode with respect to a chroma signal.

In the mode-dependent transform method according to embodiments of the present invention, the transform is performed only on a 4x4 block with respect to the chroma signal. Accordingly, as compared with when the transform is performed on both the 4x4 block and 8x8 block, a memory is required for storing only one additional DST matrix (or DCT matrix), thus reducing complexity.

As described above, information of a transform matrix used for transform among a plurality of transform matrices is provided to the entropy encoding unit 125 and is then entropy encoded, and is then provided to the decoding apparatus and is used for decoding.

The quantizing unit 113 quantizes the transformed data provided from the transforming unit 111, and provides it to the inverse-quantizing unit 115 and the entropy encoding unit 125.

The inverse-quantizing unit 115 inverse-quantizes the quantized data provided from the quantizing unit 113 and then provides it to the inverse-transforming unit 117. The inverse-transforming unit 117 inverse-transforms the inverse-quantized data using the transform matrix information used for transform in the transforming unit 111 to thereby restore the residual prediction block and then provides it to the second adder 119.

The second adder 119 restores the coding unit by adding the prediction block provided from the inverse-transforming unit 117 to the prediction block provided from the motion compensating unit 105 or the intra predicting unit 107 and stores it in the buffer 121.

The buffer 121 may store pictures, a set of restored coding units, and the plurality of pictures stored in the buffer 121 are used as reference pictures for motion prediction and compensation.

The entropy encoding unit 125 entropy encodes the quantized residual prediction block, the motion vector information used for inter prediction, prediction mode information used for intra prediction, and transform matrix information used for transform, thereby generating a bit stream.

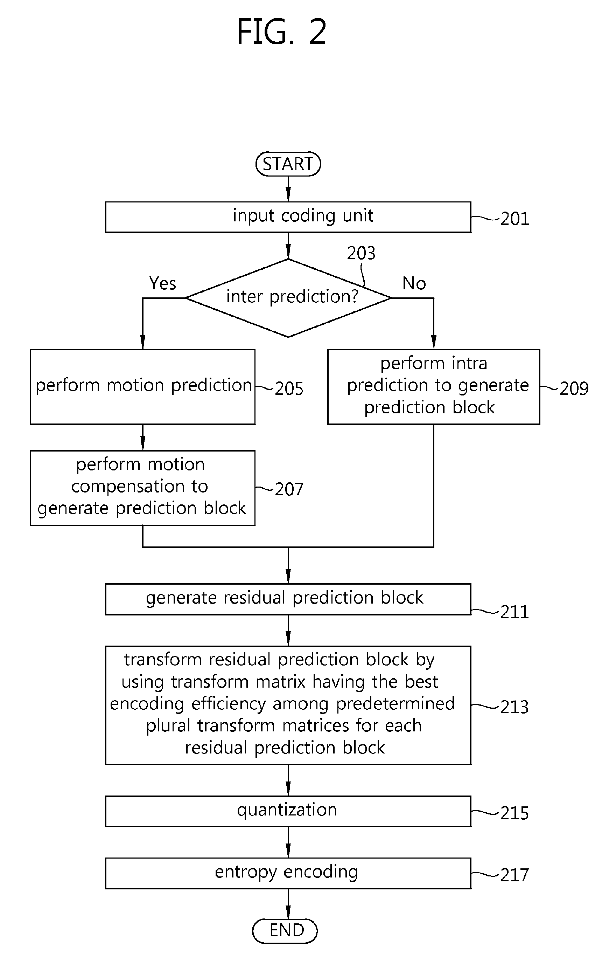

Fig. 2 is a flowchart illustrating an image encoding method according to an embodiment of the present invention.

Referring to Fig. 2, if a coding unit is input to the encoding apparatus (step 201), the encoding apparatus selects an intra prediction mode or an inter prediction mode (step 203). The input coding unit may have a size of 16x16 pixels or less or may be an extended macro block having a size of 32x32 or 64x64 pixels or more. The input coding unit may have the above-described recursive coding unit structure.

In case inter prediction is performed, motion prediction is performed based on the input coding unit and the plurality of reference pictures that have been completely restored and are stored in the buffer, thereby generating a motion vector (step 205). The generated motion vector is used to perform motion compensation to generate a prediction block corresponding to a current block (step 207).

Alternatively, in case intra prediction is performed, the prediction value of the current block is generated from encoded pixels adjacent to the input coding unit (step 209). Here, the intra prediction may separate the input coding unit into blocks having a size of 4x4, 8x8, 16x16, 32x32, or 64x64 pixels and may generate the prediction block by applying the intra prediction mode to pixels adjacent to each separated block. In case intra prediction is performed on a block having a size of 4x4 or 8x8 pixels, one of the nine H.264/AVC intra prediction modes may be applied to perform intra prediction, and in case intra prediction is performed on a block having a size of 16x16 pixels, one of four intra prediction modes may be applied to perform intra prediction. Alternatively, in case intra prediction is performed using a prediction unit having a size of 4x4 pixels, one of 18 prediction directions may be determined, in case intra prediction is performed using a prediction unit having a size of 8x8 pixels, one of a total of 35 prediction directions may be determined, in case intra prediction is performed using a prediction unit having a size of 16x16 pixels, one of 35 prediction directions may be determined, in case intra prediction is performed using a prediction unit having a size of 32x32 pixels, one of 35 prediction directions may be determined, and in case intra prediction is performed using a prediction unit having a size of 64x64 pixels, one of four prediction directions may be determined. The number of prediction directions depending on the size of the prediction unit is not limited thereto, and as the size of the prediction unit increases, the number of prediction directions may vary considering the spatial redundancy of an image.

Thereafter, the encoding apparatus generates a residual prediction block by computing the prediction block generated through intra prediction or inter prediction and the input coding unit (step 211), and then, the encoding apparatus performs transform on the generated residual prediction block using one of a predetermined number of transform matrices considering the size of the residual prediction block and encoding efficiency (step 213). That is, in case intra prediction is performed and the size of the transformed block is 4x4 pixels or 8x8 pixels, a predetermined number (e.g., 9) of transform matrices are all applied to each transform block, and then, a transform matrix having the best encoding efficiency is applied to perform encoding. In case intra prediction encoding is performed and the size of the transformed matrix is 16x16 pixels, a predetermined number (e.g., 4) of transform matrices all are applied to each transform block, and then, a transform matrix having the best encoding efficiency is applied to conduct encoding. Here, the predetermined number of transform matrices may use transform matrices defined in the MDDT.

Alternatively, in case inter prediction encoding is performed and the size of a block to be transformed is 32x32 pixels or more, the encoding apparatus applies all of a predetermined number of transform matrices corresponding to the inter prediction encoding and then applies a transform matrix having the best encoding efficiency to perform encoding.

The encoding apparatus may perform DST (Discrete Sine Transform) and/or DCT (Discrete Cosine Transform) along the horizontal direction or vertical direction depending on an intra prediction mode on a residual value (i.e., prediction error block) generated after intra prediction is performed on a block having a predetermined size-for example, 4x4 block and/or 8x8 block-with respect to a luma signal.

That is, the encoding apparatus may perform DST (Discrete Sine Transform) and/or DCT (Discrete Cosine Transform) on a block having a predetermined size-for example, 4x4 block and/or 8x8 block-whose prediction mode is an intra prediction mode with respect to the luma signal.

In case the size of the prediction unit has a size of 4x4 pixels, one of a total of 18 prediction directions may be determined, and in case the prediction unit has a size of 8x8 pixels, one of a total of 35 prediction directions may be used. The number of prediction directions depending on the size of the prediction unit is not limited thereto, and as the size of the prediction unit increases, the number of prediction directions may vary considering the spatial redundancy of an image.

Accordingly, the encoding apparatus may perform DST (Discrete Sine Transform) and/or DCT (Discrete Cosine Transform) along the horizontal direction or vertical direction depending on 18 intra prediction modes on a residual value (i.e., prediction error block) generated after intra prediction is performed on a 4x4 block with respect to a luma signal.

For example, the encoding apparatus may perform DST (Discrete Sine Transform) along the vertical direction on a residual value (i.e., prediction error block) generated after intra prediction is performed in case the intra prediction mode is the vertical mode (or 0) on the 4x4 block with respect to the luma signal. Alternatively, the encoding apparatus may perform DCT along the horizontal direction on a residual value (i.e., prediction error block) generated after intra prediction is performed in case the intra prediction mode is the vertical mode (or 0) on the 4x4 block with respect to the luma signal.

Alternatively, the encoding apparatus may perform DCT along the vertical direction on a residual value (i.e., prediction error block) generated after intra prediction is performed in case the intra prediction mode is the horizontal mode (or 1) on the 4x4 block with respect to the luma signal. Alternatively, the encoding apparatus may perform DST along the horizontal direction on a residual value (i.e., prediction error block) generated after intra prediction is performed in case the intra prediction mode is the horizontal mode (or 1) on the 4x4 block with respect to the luma signal.

Alternatively, the encoding apparatus may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on an 8x8 block with respect to a luma signal.

For example, the encoding apparatus may perform DST (Discrete Sine Transform) along the vertical direction on a residual value (i.e., prediction error block) generated after intra prediction is performed in case the intra prediction mode is the vertical mode (or 0) on an 8x8 block with respect to a luma signal. Alternatively, the encoding apparatus may perform DCT along the horizontal direction on a residual value (i.e., prediction error block) generated after intra prediction is performed in case the intra prediction mode is the vertical mode (or 0) on the 8x8 block with respect to the luma signal. Alternatively, the encoding apparatus may perform DCT along the horizontal direction on a residual value (i.e., prediction error block) generated after intra prediction is performed in case the intra prediction mode is the vertical mode (or 0) on the 8x8 block with respect to the luma signal.

Alternatively, the encoding apparatus may perform DCT along the vertical direction on a residual value (i.e., prediction error block) generated after intra prediction is performed in case the intra prediction mode is the horizontal mode (or 1) on the 8x8 block with respect to the luma signal. Alternatively, the encoding apparatus may perform DST along the horizontal direction on a residual value (i.e., prediction error block) generated after intra prediction is performed in case the intra prediction mode is the horizontal mode (or 1) on the 8x8 block with respect to the luma signal.

Alternatively, the encoding apparatus may perform one of the DST (Discrete Sine Transform) and DCT (Discrete Cosine Transform) only on a 4x4 block whose prediction mode is an intra prediction mode with respect to a luma signal.

In case the mode-dependent transform method according to embodiments of the present invention is performed only on a 4x4 block with respect to a luma signal, a memory for storing one additional DST matrix (or DCT matrix) is required with respect to the 4x4 block size is required as compared with when the mode-dependent transform method is performed on both a 4x4 block and an 8x8 block, thus reducing complexity.

The description has focused on the luma signal, for example. However, the same may also apply to the chroma signal. This is hereinafter described in greater detail. The encoding apparatus may perform DST (Discrete Sine Transform) and/or DCT (Discrete Cosine Transform) along the horizontal direction or vertical direction depending on a residual value (i.e., prediction error block) generated after intra prediction is performed on a block having a predetermined size-for example, 4x4 block and/or 8x8 block-with respect to a chroma signal.

That is, the encoding apparatus may perform DST (Discrete Sine Transform) and/or DCT (Discrete Cosine Transform) on a block having a predetermined size-for example, 4x4 block and/or 8x8 block-whose prediction mode is an intra prediction mode with respect to the chroma signal.

The encoding apparatus may perform DST (Discrete Sine Transform) and/or DCT (Discrete Cosine Transform) along the horizontal direction or vertical direction depending on 18 intra prediction modes on a residual value (i.e., prediction error block) generated after intra prediction is performed on a 4x4 block with respect to a chroma signal.

For example, the encoding apparatus may perform DST (Discrete Sine Transform) along the vertical direction on a residual value (i.e., prediction error block) generated after intra prediction is performed in case the intra prediction mode is the vertical mode (or 0) on the 4x4 block with respect to the chroma signal. Alternatively, the encoding apparatus may perform DCT along the horizontal direction on a residual value (i.e., prediction error block) generated after intra prediction is performed in case the intra prediction mode is the vertical mode (or 0) on the 4x4 block with respect to the chroma signal.

Alternatively, the encoding apparatus may perform DCT along the vertical direction ion a residual value (i.e., prediction error block) generated after intra prediction is performed in case the intra prediction mode is the horizontal mode (or 1) on the 4x4 block with respect to the chroma signal. Alternatively, the encoding apparatus may perform DST along the horizontal direction on a residual value (i.e., prediction error block) generated after intra prediction is performed in case the intra prediction mode is the horizontal mode (or 1) on the 4x4 block with respect to the chroma signal.

Alternatively, the encoding apparatus may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on an 8x8 block with respect to the chroma signal.

By way of example, the encoding apparatus may perform DST (Discrete Sine Transform) along the vertical direction on a residual value (i.e., prediction error block) generated after intra prediction is performed in case the intra prediction mode is the vertical mode (or 0) on the 8x8 block with respect to the chroma signal. Alternatively, the encoding apparatus may perform DCT along the horizontal direction on a residual value (i.e., prediction error block) generated after intra prediction is performed in case the intra prediction mode is the vertical mode (or 0) on the 8x8 block with respect to the chroma signal.

Alternatively, the encoding apparatus may perform DCT along the vertical direction on a residual value (i.e., prediction error block) generated after intra prediction is performed in case the intra prediction mode is the horizontal mode (or 1) on the 8x8 block with respect to the chroma signal. Alternatively, the encoding apparatus may perform DST along the horizontal direction on a residual value (i.e., prediction error block) generated after intra prediction is performed in case the intra prediction mode is the horizontal mode (or 1) on the 8x8 block with respect to the chroma signal.

Alternatively, the encoding apparatus may perform one of DST (Discrete Sine Transform) and DCT (Discrete Cosine Transform) only on a 4x4 block whose prediction mode is an intra prediction mode with respect to a chroma signal.

The mode-dependent transform method according to embodiments of the present invention is performed only on a 4x4 block with respect to the chroma signal. Accordingly, complexity may be reduced as compared with when transform is performed on both a 4x4 block and an 8x8 block because a memory for storing only one additional DST matrix (or DCT matrix) is required.

Thereafter, the encoding apparatus performs quantization on the transformed data (step 215), and generates a bit stream by entropy encoding the quantized data (step 217). Here, the entropy encoded information may include quantized residual prediction block, motion vector information used for inter prediction, prediction mode information used for intra prediction, and transform matrix information used for transform.

As described in Figs. 1 and 2, in the encoding method according to an embodiment of the present invention, all of a plurality of predetermined transform matrices are applied to a residual prediction block generated through inter prediction or intra prediction, according to the size of the block to be transformed upon transform, and then, a transform matrix having the best encoding efficiency is applied to transform the residual prediction block, thus enhancing encoding efficiency.

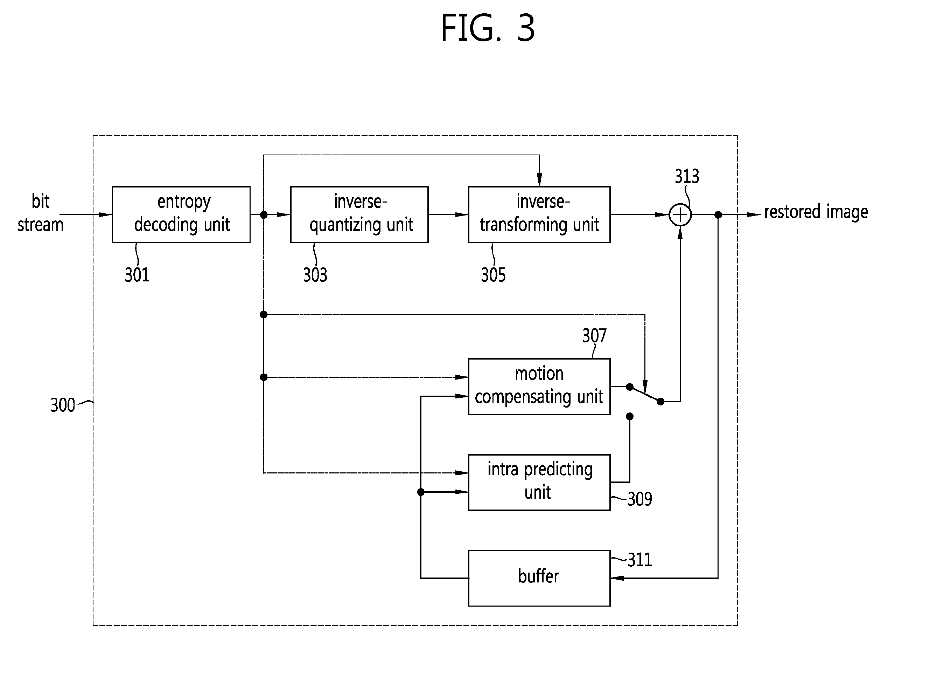

Fig. 3 is a block diagram illustrating the configuration of a decoding apparatus according to an embodiment of the present invention. Fig. 3 illustrates a decoding apparatus that decodes an image encoded by the encoding apparatus shown in Fig.1.

Referring to Fig. 3, the decoding apparatus 300 according to an embodiment of the present invention includes an entropy decoding unit 301, an inverse-quantizing unit 303, an inverse-transforming unit 305, a motion compensating unit 307, an intra predicting unit 309, a buffer 311, and a third adder 313.

The entropy decoding unit 301 entropy-decodes the bit stream provided from the encoding apparatus and extracts the quantized residual prediction block, motion vector used for inter prediction, the prediction mode information used for intra prediction, and transform matrix used for transform.

The inverse-quantizing unit 303 inverse-quantizes the quantized residual prediction block provided from the entropy decoding unit 301, and the inverse-transforming unit 305 inverse-transforms the data provided from the inverse-quantizing unit 303. Here, the inverse-transforming unit 305 restores the residual prediction block by performing inverse-transform based on the transform matrix information provided from the entropy decoding unit 301.

In the mode-dependent transform method according to an embodiment of the present invention, the inverse-transforming unit 305 may perform DST (Discrete Sine Transform) and/or DCT (Discrete Cosine Transform) along the horizontal direction or vertical direction depending on an intra prediction mode on a residual value (i.e., prediction error block) generated after intra prediction is performed on a block having a predetermined size-for example, 4x4 block or 8x8 block-with respect to a luma signal.

That is, in the mode-dependent transform method according to an embodiment of the present invention, the inverse-transforming unit 305 may perform DST (Discrete Sine Transform) and/or DCT (Discrete Cosine Transform) on a block having a predetermined size-for example, 4x4 block or 8x8 block-whose prediction mode is an intra prediction mode with respect to a luma signal.

In case the prediction unit has a size of 4x4 pixels, one of a total of 18 prediction directions may be determined, and in case the prediction unit has a size of 8x8 pixels, one of a total of 35 prediction directions may be used. The number of prediction directions depending on the size of the prediction unit is not limited thereto, and as the size of the prediction unit increases, the number of prediction directions may vary considering the spatial redundancy of an image.

Accordingly, the inverse-transforming unit 305 may perform DST (Discrete Sine Transform) and/or DCT (Discrete Cosine Transform) along the horizontal direction or vertical direction depending on 18 intra prediction modes on a residual value (i.e., prediction error block) generated after intra prediction is performed on a 4x4 block with respect to a luma signal.

For example, the inverse-transforming unit 305 may perform DST (Discrete Sine Transform) along the vertical direction on a residual value (i.e., prediction error block) generated after intra prediction is performed in case the intra prediction mode is the vertical mode (or 0) on the 4x4 block with respect to the luma signal. Alternatively, the inverse-transforming unit 305 may perform DCT along the horizontal direction on a residual value (i.e., prediction error block) generated after intra prediction is performed in case the intra prediction mode is the vertical mode (or 0) on the 4x4 block with respect to the luma signal.

Alternatively, the inverse-transforming unit 305 may perform DCT along the vertical direction on a residual value (i.e., prediction error block) generated after intra prediction is performed in case the intra prediction mode is the horizontal mode (or 1) on the 4x4 block with respect to the luma signal. Alternatively, the inverse-transforming unit 305 may perform DST along the horizontal direction on a residual value (i.e., prediction error block) generated after intra prediction is performed in case the intra prediction mode is the horizontal mode (or 1) on the 4x4 block with respect to the luma signal.

Alternatively, the inverse-transforming unit 305 may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on an 8x8 block with respect to a luma signal.

For example, the inverse-transforming unit 305 may perform a DST (Discrete Sine Transform) along the vertical direction on a residual value (i.e., prediction error block) generated after intra prediction is performed in case the intra prediction mode is the vertical mode (or 0) on the 8x8 block with respect to the luma signal. Alternatively, the inverse-transforming unit 305 may perform DCT along the horizontal direction on a residual value (i.e., prediction error block) generated after intra prediction is performed in case the intra prediction mode is the vertical mode (or 0) on the 8x8 block with respect to the luma signal.

Alternatively, the inverse-transforming unit 305 may perform DCT along the vertical direction on a residual value (i.e., prediction error block) in case the intra prediction mode is the horizontal mode (or 1) on the 8x8 block with respect to the luma signal. Alternatively, the inverse-transforming unit 305 may perform DST along the horizontal direction on a residual value (i.e., prediction error block) generated after intra prediction is performed in case the intra prediction mode is the horizontal mode (or 1) on the 8x8 block with respect to the luma signal.

Alternatively, the inverse-transforming unit 305 may perform one of the DST (Discrete Sine Transform) and the DCT (Discrete Cosine Transform) only on a 4x4 block whose prediction mode is an intra prediction mode with respect to the luma signal.

As described above, in case the inverse-transforming unit 305 performs transform only on a 4x4 block with respect to the luma signal, a memory for storing only one additional DST matrix (or DCT matrix) with respect to the 4x4 block is required as compared with when inverse-transform is performed on both a 4x4 block and an 8x8 block, thus reducing complexity.

Although the description has focused on the luma signal, the same may also apply to the chroma signal, and an example thereof will be described below. The inverse-transforming unit 305 may perform DST (Discrete Sine Transform) and/or DCT (Discrete Cosine Transform) along the horizontal direction or vertical direction depending on an intra prediction mode on a residual value (i.e., prediction error block) generated after intra prediction is performed on a block having a predetermined size-for example, 4x4 block or 8x8 block-with respect to a chroma signal.

That is, the inverse-transforming unit 305 may perform DST (Discrete Sine Transform) and/or DCT (Discrete Cosine Transform) on a block having a predetermined size-for example, 4x4 block or 8x8 block-whose prediction mode is an intra prediction mode with respect to a chroma signal.

Accordingly, the inverse-transforming unit 305 may perform DST (Discrete Sine Transform) and/or DCT (Discrete Cosine Transform) along the horizontal direction or vertical direction depending on 18 intra prediction modes on a residual value (i.e., prediction error block) generated after intra prediction is performed on a 4x4 block with respect to a chroma signal.

For example, the inverse-transforming unit 305 may perform DST (Discrete Sine Transform) along the vertical direction on a residual value (i.e., prediction error block) in case the intra prediction mode is the vertical mode (or 0) on the 4x4 block with respect to the chroma signal. Alternatively, the inverse-transforming unit 305 may perform DCT along the horizontal direction on a residual value (i.e., prediction error block) generated after intra prediction is performed in case the intra prediction mode is the vertical mode (or 0) on the 4x4 block with respect to the chroma signal.

Alternatively, the inverse-transforming unit 305 may perform DCT along the vertical direction on a residual value (i.e., prediction error block) generated after intra prediction is performed in case the intra prediction mode is the horizontal mode (or 1) on the 4x4 block with respect to the chroma signal. Alternatively, the inverse-transforming unit 305 may perform DST along the horizontal direction on a residual value (i.e., prediction error block) generated after intra prediction is performed in case the intra prediction mode is the horizontal mode (or 1) on the 4x4 block with respect to the chroma signal.

Alternatively, the inverse-transforming unit 305 may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on an 8x8 block with respect to a chroma signal.

For example, the inverse-transforming unit 305 may perform DST (Discrete Sine Transform) along the vertical direction on a residual value (i.e., prediction error block) generated after intra prediction is performed in case the intra prediction mode is the vertical mode (or 0) on the 8x8 block with respect to the chroma signal. Alternatively, the inverse-transforming unit 305 may perform DCT along the horizontal direction on a residual value (i.e., prediction error block) generated after intra prediction is performed in case the intra prediction mode is the vertical mode (or 0) on the 8x8 block with respect to the chroma signal.

Alternatively, the inverse-transforming unit 305 may perform DCT along the vertical direction on a residual value (i.e., prediction error block) generated after intra prediction is performed in case the intra prediction mode is the horizontal mode (or 1) on the 8x8 block with respect to the chroma signal. Alternatively, the inverse-transforming unit 305 may perform DST along the horizontal direction on a residual value (i.e., prediction error block) generated after intra prediction is performed in case the intra prediction mode is the horizontal mode (or 1) on the 8x8 block with respect to the chroma signal.

Alternatively, the inverse-transforming unit 305 may perform one of the DST (Discrete Sine Transform) and the DCT (Discrete Cosine Transform) only on a 4x4 block whose prediction mode is an intra prediction mode with respect to the chroma signal.

In case the inverse-transforming unit 305 performs transform only on a 4x4 block with respect to the chroma signal, a memory for storing only one additional DST matrix (or DCT matrix) with respect to the 4x4 block size is required as compared with when transform is performed on both a 4x4 block and an 8x8 block, thus reducing complexity.

The motion compensating unit 307 generates a prediction block by applying the motion vector provided from the entropy decoding unit 301 to the reference block of the reference picture stored in the buffer 311.

The intra predicting unit 309 generates a prediction value of a current block from pixels adjacent to the block to be currently subject to decoding based on the intra prediction mode provided from the entropy decoding unit 301. Here, the intra predicting unit 309 may separate the block that is currently subject to decoding into blocks having a size of 4x4, 8x8, 16x16, 32x32, or 64x64 pixels and may generate a prediction block from pixels adjacent to each separated block using the intra prediction mode information.

In the decoding apparatus 300 according to an embodiment of the present invention, only one of a prediction block generated through the motion compensating unit 307 and a prediction block generated through the intra predicting unit 309 may be generated based on the selection information extracted by the entropy decoding unit 301, and only one of the motion compensating unit 307 and the intra predicting unit 309 may be connected with the third adder 313 through path switching. That is, the decoding apparatus 300 may perform only one of the inter prediction and intra prediction corresponding to the encoding mode that has been fulfilled in the encoding apparatus.

The buffer 311 stores the restored image so that the restored image may be used as a reference picture.

The third adder 313 adds the prediction block provided from the motion compensating unit 307 or the intra predicting unit 309 and the residual prediction block provided from the inverse-transforming unit 305, thus restoring the original block.

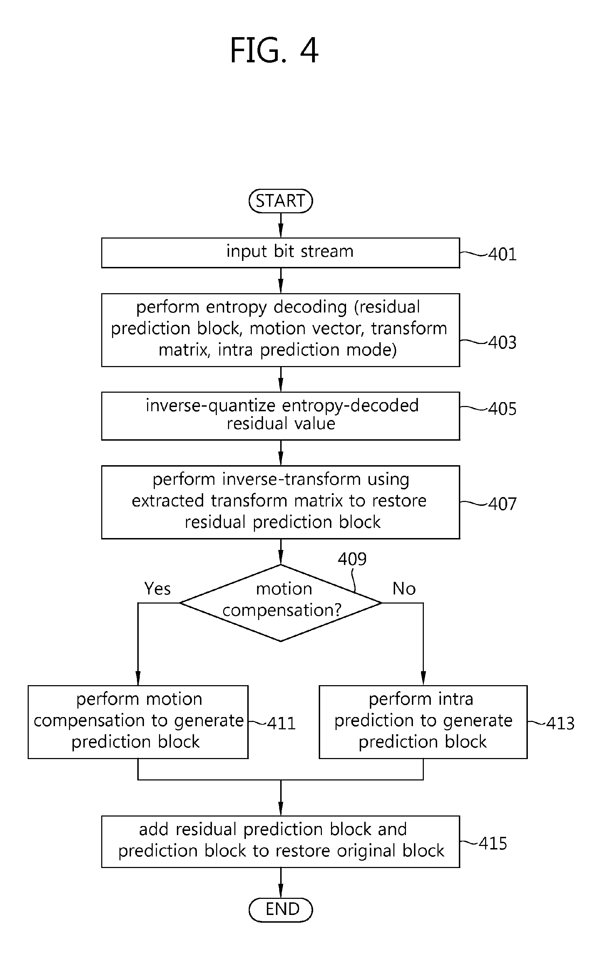

Fig. 4 is a flowchart illustrating an image decoding method according to an embodiment of the present invention.

Referring to Fig. 4, when receiving an encoded bit stream from the encoding apparatus (step 401), the decoding apparatus extracts the quantized residual prediction block, motion vector, transform matrix, and intra prediction mode information by performing entropy-decoding on the bit stream (step 403). Here, the intra prediction mode may be extracted only when the encoding apparatus has performed intra prediction, and the entropy-decoded data may include encoding mode information (inter prediction or intra prediction).

Thereafter, the decoding apparatus inverse-quantizes the entropy-decoded residual value (step 405) and inverse-transforms the inverse-quantized data using the extracted transform matrix information, thereby restoring the residual prediction block (step 407).

The inverse-transform may perform DST (Discrete Sine Transform) and/or DCT (Discrete Cosine Transform) along the horizontal direction or vertical direction depending on an intra prediction mode on a residual value (i.e., prediction error block) generated after intra prediction is performed on a block having a predetermined size-for example, 4x4 block and/or 8x8 block-with respect to a luma signal.

That is, the inverse-transform may perform DST (Discrete Sine Transform) and/or DCT (Discrete Cosine Transform) on a block having a predetermined size-for example, 4x4 block and/or 8x8 block-whose prediction mode is an intra prediction mode with respect to the luma signal.

In case the prediction unit has a size of 4x4 pixels, one of a total of 18 prediction directions may be determined, and in case the prediction unit has a size of 8x8 pixels, one of a total of 35 prediction directions may be used. The number of prediction directions depending on the size of the prediction unit is not limited thereto, and as the size of the prediction unit increases, the number of prediction directions may vary considering the spatial redundancy of an image.

Accordingly, the inverse-transform may perform DST (Discrete Sine Transform) and/or DCT (Discrete Cosine Transform) along the horizontal direction or vertical direction depending on 18 intra prediction modes on a residual value (i.e., prediction error block) on a 4x4 block with respect to a luma signal.

For example, the inverse-transform may perform DST (Discrete Sine Transform) along the vertical direction on a residual value (i.e., prediction error block) generated after intra prediction is performed in case the intra prediction mode is the vertical mode (or 0) on the 4x4 block with respect to the luma signal. Alternatively, the inverse-transform may perform DCT along the horizontal direction on a residual value (i.e., prediction error block) generated after intra prediction is performed in case the intra prediction mode is the vertical mode (or 0) on the 4x4 block with respect to the luma signal.

Alternatively, the inverse-transform may perform DCT along the vertical direction on a residual value (i.e., prediction error block) generated after intra prediction is performed in case the intra prediction mode is the horizontal mode

(or 1) on the 4x4 block with respect to the luma signal. Alternatively, the inverse-transform may perform DST along the horizontal direction on a residual value (i.e., prediction error block) generated after intra prediction is performed in case the intra prediction mode is the horizontal mode (or 1) on the 4x4 block with respect to the luma signal.

Further, the inverse-transform may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on the 8x8 block with respect to the luma signal.

For example, the inverse-transform may perform DST (Discrete Sine Transform) along the vertical direction on a residual value (i.e., prediction error block) generated after intra prediction is performed in case the intra prediction mode is the vertical mode (or 0) on the 8x8 block with respect to the luma signal. Alternatively, the inverse-transform may perform DCT along the horizontal direction on a residual value (i.e., prediction error block) generated after intra prediction is performed in case the intra prediction mode is the vertical mode (or 0) on the 8x8 block with respect to the luma signal.

Alternatively, the inverse-transform may perform DCT along the vertical direction on a residual value (i.e., prediction error block) generated after intra prediction is performed in case the intra prediction mode is the horizontal mode (or 1) on the 8x8 block with respect to the luma signal. Alternatively, the inverse-transform may perform DST along the horizontal direction on a residual value (i.e., prediction error block) generated after intra prediction is performed in case the intra prediction mode is the horizontal mode (or 1) on the 8x8 block with respect to the luma signal.

The inverse-transform may use a DST (Discrete Sine Transform) transform matrix only on a 4x4 block whose prediction mode is an intra prediction mode with respect to the luma signal. As such, in case the inverse-transform is performed only on a 4x4 block whose prediction mode is the intra prediction mode with respect to the luma signal, a memory for storing only one additional DST matrix (or DCT matrix) with respect to the 4x4 block size is required as compared with when inverse-transform is performed on both a 4x4 block and an 8x8 block, thus reducing complexity.

Although the description has focused on the luma signal, the same may also apply to the chroma signal, as the specific description follows below. The inverse-transform may perform DST (Discrete Sine Transform) and/or DCT (Discrete Cosine Transform) along the horizontal direction or vertical direction depending on an intra prediction mode on a residual value (i.e., prediction error block) generated after intra prediction is performed on a block having a predetermined size-for example, 4x4 block and/or 8x8 block-with respect to a chroma signal.

That is, the inverse-transform may perform DST (Discrete Sine Transform) and/or DCT (Discrete Cosine Transform) on a block having a predetermined size-for example, 4x4 block and/or 8x8 block-whose prediction mode is an intra prediction mode with respect to the chroma signal.

The inverse-transform may perform DST (Discrete Sine Transform) and/or DCT (Discrete Cosine Transform) along the horizontal direction or vertical direction depending on 18 intra prediction modes on a residual value (i.e., prediction error block) generated after intra prediction is performed on a 4x4 block with respect to a chroma signal.

For example, the inverse-transform may perform DST (Discrete Sine Transform) along the vertical direction on a residual value (i.e., prediction error block) generated after intra prediction is performed in case the intra prediction mode is the vertical mode (or 0) on the 4x4 block with respect to the chroma signal. Alternatively, the inverse-transform may perform DCT along the horizontal direction on a residual value (i.e., prediction error block) generated after intra prediction is performed in case the intra prediction mode is the vertical mode (or 0) on the 4x4 block with respect to the chroma signal.

Alternatively, the inverse-transform may perform DCT along the vertical direction on a residual value (i.e., prediction error block) generated after intra prediction is performed in case the intra prediction mode is the horizontal mode (or 1) on the 4x4 block with respect to the chroma signal. Or the inverse-transform may perform DST along the horizontal direction on a residual value (i.e., prediction error block) generated after intra prediction is performed in case the intra prediction mode is the horizontal mode (or 1) on the 4x4 block with respect to the chroma signal.

Alternatively, the inverse-transform may perform DST (Discrete Sine Transform) and/or DCT (Discrete Cosine Transform) along the horizontal direction or vertical direction depending on 35 intra prediction modes on a residual value (i.e., prediction error block) generated after intra prediction is performed on an 8x8 block with respect to a chroma signal.

For example, the inverse-transform may perform DST (Discrete Sine Transform) along the vertical direction on a residual value (i.e., prediction error block) generated after intra prediction is performed in case the intra prediction mode is the vertical mode (or 0) on the 8x8 block with respect to the chroma signal. Alternatively, the inverse-transform may perform DCT along the horizontal direction on a residual value (i.e., prediction error block) generated after intra prediction is performed in case the intra prediction mode is the vertical mode (or 0) on the 8x8 block with respect to the chroma signal.

Alternatively, the inverse-transform may perform DCT along the vertical direction on a residual value (i.e., prediction error block) generated after intra prediction is performed in case the intra prediction mode is the horizontal mode (or 1) on the 8x8 block with respect to the chroma signal. Alternatively, the inverse-transform may perform DST along the horizontal direction on a residual value (i.e., prediction error block) generated after intra prediction is performed in case the intra prediction mode is the horizontal mode (or 1) on the 8x8 block with respect to the chroma signal.

The inverse-transform may use a DST (Discrete Sine Transform) and/or DCT transform matrix only on a 4x4 block whose prediction mode is an intra prediction mode with respect to the chroma signal.

As such, in case the inverse-transform is performed only on a 4x4 block whose prediction mode is an intra prediction mode with respect to the chroma signal, a memory for storing only one additional DST matrix (or DCT matrix) with respect to the 4x4 block size is required as compared with when the inverse-transform is performed on both a 4x4 block and an 8x8 block, thus reducing complexity.

Further, the decoding apparatus determines a decoding mode based on the encoding mode included in the entropy-decoded information (step 409), and in case the decoding mode is determined as motion compensation, performs motion compensation using the extracted motion vector, thereby generating a prediction block (step 411).

Alternatively, in case the decoding mode is determined as intra prediction, the decoding apparatus generates a prediction block by applying an extracted intra prediction mode to pixels adjacent to the current block to be decoded (step 413).

Thereafter, the decoding apparatus restores an original block-that is, the coding unit-by adding the restored residual prediction block with the prediction block generated in step 411 or 413 (step 415).

Although embodiments of the present invention have been described, it may be understood by those skilled in the art that various modifications and variations may be made thereto without departing from the spirit and scope of the invention defined in the claims.

**Description of elements**

| | |
|---|---|
| 100 : encoding apparatus | 101 : encoding controller |
| 103 : motion predicting unit | 105 : motion compensating unit |
| 107 : intra predicting unit | 109 : first adder |
| 111 : transforming unit | 113 : quantizing unit |
| 115 : inverse-quantizing unit | 117 : inverse-transforming unit |
| 119 : second adder | 121 : buffer |
| 125 : entropy encoding unit | 300 : decoding apparatus |
| 301 : entropy decoding unit | 303: inverse-quantizing unit |
| 305 : inverse-transforming unit | 307: motion compensating unit |
| 309 : intra predicting unit | 311: buffer |
| 313 : third adder | |

## Claims

1. An image encoding method comprising:
receiving a coding unit to be encoded;
generating a prediction block by performing one of inter prediction and intra prediction on the coding unit;
generating a residual prediction block based on the generated prediction block and the coding unit; and
transforming the generated residual prediction block by applying a plurality of predetermined transform matrices to the residual prediction block.

2. The image encoding method of claim 1, wherein transforming the generated residual prediction block by applying a plurality of predetermined transform matrices to the residual prediction block comprises transforming the residual prediction block by applying all of nine transform matrices to each residual prediction block and then using a transform matrix having the best encoding efficiency in a case where the residual prediction block that is subjected to intra prediction and transform has a size of 4x4 or 8x8 pixels.

3. The image encoding method of claim 1, wherein transforming the generated residual prediction block by applying a plurality of predetermined transform matrices to the residual prediction block comprises transforming the residual prediction block by applying all of four transform matrices to each residual prediction block and then using a transform matrix having the best encoding efficiency in a case where the residual prediction block that is subjected to intra prediction and transform has a size of 16x16 pixels.

4. The image encoding method of claim 1, wherein transforming the generated residual prediction block by applying a plurality of predetermined transform matrices to the residual prediction block comprises performing transform using the plurality of predetermined transform matrices along a specific direction of intra prediction.

5. The image encoding method of claim 1, wherein transforming the generated residual prediction block by applying a plurality of predetermined transform matrices to the residual prediction block comprises performing transform using the plurality of predetermined transform matrices along a horizontal direction upon transform when intra prediction is performed based on a horizontal direction mode among nine intra prediction modes in a case where the residual prediction block has a size of 4x4 pixels.

6. The image encoding method of claim 1, wherein the residual prediction block used for transform is implemented as a transform unit (TU), and wherein the transform unit has a recursive tree structure.

7. The image encoding method of claim 1, wherein the prediction unit is an extended macro block having a size of 32x32 pixels or more.

8. An image decoding method of decoding an encoded bit stream by applying one of a plurality of predetermined transform matrices to a residual value generated after intra prediction is performed, the method comprising:
extracting at least one information of a motion vector, a quantized residual prediction block, a motion vector, an intra prediction mode, and a transform matrix by entropy-decoding the bit stream;
inverse-quantizing the quantized residual prediction block;
restoring the residual prediction block by inverse-transforming the inverse-quantized residual prediction block by applying the transform matrix to the inverse-quantized residual prediction block;
generating a prediction block by performing one of motion compensation and intra prediction; and
restoring an original coding unit by adding the restored residual prediction block and the generated prediction block.

9. The image decoding method of claim 8, wherein the transform matrix applies all of nine transform matrices to each residual prediction block and uses a transform matrix having the best encoding efficiency in a case where the residual prediction block that is subjected to the intra prediction and transform has a size of 4x4 or 8x8 pixels.

10. The image decoding method of claim 8, wherein the transform matrix applies all of four transform matrices to each residual prediction block and uses a transform matrix having the best encoding efficiency in a case where the residual prediction block that is subjected to the intra prediction and transform has a size of 16x16 pixels.

11. The image decoding method of claim 8, wherein restoring the residual prediction block by inverse-transforming the inverse-quantized residual prediction block by applying the transform matrix to the inverse-quantized residual prediction block comprises performing inverse-transform using the transform matrix based on the intra prediction mode.

12. The image decoding method of claim 8, wherein restoring the residual prediction block by inverse-transforming the inverse-quantized residual prediction block by applying the transform matrix to the inverse-quantized residual prediction block comprises performing inverse-transform using the transform matrix along a horizontal direction upon transform when intra prediction is performed based on a horizontal direction mode among nine intra prediction modes in a case where the residual prediction block has a size of 4x4 pixels.

13. The image decoding method of claim 8, wherein the residual prediction block used for transform is implemented as a transform unit (TU), and the transform unit has a recursive tree structure.

14. The image decoding method of claim 8, wherein the coding unit is an extended macro block having a size of 32x32 pixels or more.

15. The image decoding method of claim 8, wherein the transform matrix uses at least one transform matrix of DST (Discrete Sine Transform) and DCT (Discrete Cosine Transform) on a 4x4 block whose prediction mode is an intra prediction mode with respect to a luma signal.

16. The image decoding method of claim 8, wherein the transform matrix uses a DST (Discrete Sine Transform) transform matrix on a 4x4 block whose prediction mode is an intra prediction mode with respect to a luma signal.

17. The image decoding method of claim 8, wherein the transform matrix uses at least transform matrix of DST (Discrete Sine Transform) and DCT (Discrete Cosine Transform) on a 4x4 block whose prediction mode is an intra prediction mode with respect to a chroma signal.

18. The image decoding method of claim 8, wherein the transform matrix uses a DST (Discrete Sine Transform) transform matrix on a 4x4 block whose prediction mode is an intra prediction mode with respect to a chroma signal.

19. The image decoding method of claim 8, wherein the transform matrix uses a DST (Discrete Sine Transform) transform matrix only on a 4x4 block whose prediction mode is an intra prediction mode with respect to a luma signal.
